(19) Europäisches Patentamt / European Patent Office / Office européen des brevets

(11) **EP 4 202 320 A1**

(12) **EUROPEAN PATENT APPLICATION**
published in accordance with Art. 153(4) EPC

(43) Date of publication:
**28.06.2023 Bulletin 2023/26**

(21) Application number: **21860870.1**

(22) Date of filing: **11.05.2021**

(51) International Patent Classification (IPC):
**F25B 49/02** (2006.01)    **G01N 17/04** (2006.01)
**F25B 47/00** (2006.01)

(52) Cooperative Patent Classification (CPC):
**F25B 47/00; F25B 49/02; G01N 17/04**

(86) International application number:
**PCT/JP2021/017928**

(87) International publication number:
**WO 2022/044438 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.08.2020 JP 2020140920**

(71) Applicant: **Panasonic Intellectual Property
Management Co., Ltd.
Osaka-shi, Osaka 540-6207 (JP)**

(72) Inventor: **NAKAJIMA, Takahito
Osaka-shi, Osaka 540-6207 (JP)**

(74) Representative: **Eisenführ Speiser
Patentanwälte Rechtsanwälte PartGmbB
Postfach 31 02 60
80102 München (DE)**

(54) **REFRIGERATION CYCLE DEVICE AND REFRIGERATION CYCLE SYSTEM**

(57)    A refrigeration cycle device according to the present disclosure includes a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, through which a refrigerant is circulated, and that contains aluminum as a main component; a corrosion sensor that is disposed at least one of on an outer surface of the refrigerant pipe and around the refrigerant pipe, and that measures an electrical resistance; and a processing unit that estimates a lifetime of the refrigerant pipe based on a change in the electrical resistance measured by the corrosion sensor, wherein the refrigerant pipe has a sacrificial layer on the outer surface of the refrigerant pipe, the sacrificial layer being less noble than the main component of the refrigerant pipe.

Fig. 1

**Description**

TECHNICAL FIELD

The present disclosure relates to a refrigeration cycle device and a refrigeration cycle system.

BACKGROUND ART

As a refrigeration cycle device, for example, Patent Document 1 discloses an air conditioner that makes it possible to get a grasp of the lifetime of an outdoor unit of the air conditioner.

Patent Document 1 discloses an air conditioner equipped with a corrosion resistance diagnostic device. The corrosion resistance diagnostic device described in Patent Document 1 includes a core layer and a sacrificial layer that is in contact with the core layer and that has a corrosion resistance lower than that of the core layer, and determines the corrosion resistance by evaluating the level of corrosion. This device also makes it possible to get a grasp of the remaining product lifetime, by facilitating the understanding of the corrosion depth of the sacrificial layer.

PRIOR ART DOCUMENT

PATENT DOCUMENT

Patent Document 1: WO 2017/199569 A

SUMMARY OF THE INVENTION

PROBLEMS TO BE SOLVED BY THE INVENTION

However, the air conditioner described in Patent Document 1 still has room for improvement with regards to the accuracy of the lifetime estimation of the air conditioner.

Therefore, an object of the present disclosure is to solve the problem described above, and to provide a refrigeration cycle device and a refrigeration cycle system capable of improving the accuracy of the lifetime estimation of the refrigeration cycle device.

MEANS FOR SOLVING THE PROBLEMS

A refrigeration cycle device according to one aspect of the present disclosure is a refrigeration cycle device that includes a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, through which a refrigerant is circulated, and that contains aluminum as a main component; a corrosion sensor that is disposed at least one of on an outer surface of the refrigerant pipe and around the refrigerant pipe, and that measures an electrical resistance; and a processing unit that estimates a lifetime of the refrigerant pipe based on a change in the electrical resistance measured by the corrosion sensor, wherein the refrigerant pipe has a sacrificial layer on the outer surface of the refrigerant pipe, the sacrificial layer being less noble than the main component of the refrigerant pipe.

A refrigeration cycle system according to one aspect of the present disclosure includes a refrigeration cycle device including a first heat exchanger, a compressor, a second heat exchanger, and an expansion mechanism, and a processing device that communicates with the refrigeration cycle device over a network, wherein the refrigeration cycle device includes: a refrigerant pipe that connects the first heat exchanger, the compressor, the second heat exchanger, and the expansion mechanism, through which a refrigerant is circulated, and that contains aluminum as a main component; a corrosion sensor that is disposed at least one of on an outer surface of the refrigerant pipe and around the refrigerant pipe, and that measures an electrical resistance; a storage that stores therein information of the electrical resistance measured by the corrosion sensor; and a first communicator that transmits the information of the electrical resistance stored in the storage over the network, the refrigerant pipe has a sacrificial layer on the outer surface of the refrigerant pipe, the sacrificial layer being less noble than the main component of the refrigerant pipe, and the processing device includes: a second communicator that receives the information of the electrical resistance over the network; and a processing unit that estimates a lifetime of the refrigerant pipe based on a change in the electrical resistance.

EFFECTS OF THE INVENTION

According to the present disclosure, it is possible to improve the accuracy of a lifetime estimation of the refrigeration cycle device.

BRIEF DESCRIPTION OF THE DRAWINGS

FIG. 1 is a schematic diagram of an example of a refrigeration cycle device according to a first embodiment of the present disclosure.
FIG. 2 is a schematic diagram of a second heat exchanger according to the first embodiment.
FIG. 3 is a sectional view of a corrosion sensor according to the first embodiment.
FIG. 4 is a graph illustrating a relationship between an electrical resistance detected by the corrosion sensor and the time elapsed, in the first embodiment.
FIG. 5A is a graph illustrating a relationship between a sectional area ratio calculated based on the electrical resistance detected by the corrosion sensor and the time elapsed, in the first embodiment.

FIG. 5B is a graph illustrating a relationship between a sectional area ratio and the time elapsed, after the time has elapsed further from that illustrated in FIG. 5A.

FIG. 6 is a schematic diagram of an RCM sensor according to a first modification of the first embodiment.

FIG. 7 is a schematic diagram of a corrosion sensor according to a second embodiment of the present disclosure.

FIG. 8 is a block diagram of a refrigeration cycle device according to a third embodiment of the present disclosure.

FIG. 9 is a block diagram of a refrigeration cycle system according to a fourth embodiment of the present disclosure.

## MODES FOR CARRYING OUT THE INVENTION

(Background to present disclosure)

In a refrigeration cycle device, the refrigerant pipe through which the refrigerant is circulated is made of a material containing aluminum as a main component, for example.

However, in the refrigerant pipe containing aluminum as a main component, pitting corrosion takes place in an environment subjected to salt damage or high humidity, and the refrigerant pipe may become penetrated. Pitting corrosion is corrosion that takes place in the radial direction of a refrigerant pipe. At the same time, in order to suppress pitting corrosion, sometimes a sacrificial layer, which corrodes preferentially over the refrigerant pipe, is provided on the outer surface of the refrigerant pipe. In recent years, there has been a demand for improvement in the accuracy of a lifetime estimation of a refrigerant pipe, to address such a refrigerant pipe penetration caused by the corrosion, proactively.

To address this issue, based on a finding that the electrical resistances of the sacrificial layer and the refrigerant pipe change when the sectional area of the sacrificial layer becomes smaller as corrosion takes place, the inventors have made studies on a configuration of a refrigeration cycle device where the electrical resistance of the sacrificial layer and the refrigerant pipe are measured using a corrosion sensor. Furthermore, as a fruit of intensive studies on a change in the electrical resistance measured by the corrosion sensor included in this configuration, the inventors found out that, based on a change in the electrical resistance, it is possible to make an accurate estimation of the lifetime of a refrigerant pipe containing aluminum as a main component.

Based on these novel findings, the inventors have arrived at the following disclosure.

A refrigeration cycle device according to a first aspect of the present disclosure is a refrigeration cycle device that includes a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, through which a refrigerant is circulated, and that contains aluminum as a main component; a corrosion sensor that is disposed at least one of on an outer surface of the refrigerant pipe and around the refrigerant pipe, and that measures an electrical resistance; and a processing unit that estimates a lifetime of the refrigerant pipe based on a change in the electrical resistance measured by the corrosion sensor, wherein the refrigerant pipe has a sacrificial layer on the outer surface of the refrigerant pipe, the sacrificial layer being less noble than the main component of the refrigerant pipe.

With such a configuration, it is possible to improve the accuracy of a lifetime estimation of a refrigerant pipe, that is, a lifetime estimation of a refrigeration cycle device. By providing the sacrificial layer to the refrigerant pipe containing aluminum as a main component, it is possible to suppress the corrosion of the refrigerant pipe.

A refrigeration cycle device according to a second aspect of the present disclosure may further include a temperature sensor that measures a temperature around the corrosion sensor, and the processing unit may correct the electrical resistance measured by the corrosion sensor based on the temperature measured by the temperature sensor.

With such a configuration, it is possible to correct the electrical resistance measured by the corrosion sensor using the temperature around the corrosion sensor. In this manner, it is possible to make a further improvement in the accuracy of the lifetime estimation of the refrigerant pipe.

In a refrigeration cycle device according to a third aspect of the present disclosure, the corrosion sensor may be disposed on the refrigerant pipe installed in at least one of the first heat exchanger and the second heat exchanger.

With such a configuration, it is possible to improve the accuracy of a lifetime estimation of the refrigerant pipe installed in at least one of the first heat exchanger and the second heat exchanger.

In a refrigeration cycle device according to a fourth aspect of the present disclosure, the corrosion sensor may include: a base material; a base material sacrificial layer that is provided on a surface of the base material and that has a surface potential lower than that of the base material; a power supply that generates a constant current flow in the base material and in the base material sacrificial layer; a measuring unit that measures a voltage applied to the base material and the base material sacrificial layer; and a converter that converts the voltage measured by the measuring unit into an electrical resistance, wherein a main component of the base material may be the same as the main component of the refrigerant pipe, and a main component of the base material sacrificial layer may be the same as a main component of the sacrificial layer.

With such a configuration, because the base material is made of a material having a composition similar to that of the refrigerant pipe, and because the base material sacrificial layer is made of a material having a composition similar to that of the sacrificial layer of the refrigerant pipe, it is possible to make a further improvement in the accuracy of the lifetime estimation of the refrigerant pipe.

In a refrigeration cycle device according to a fifth aspect of the present disclosure, a thickness of the base material may be substantially equal to a thickness of the refrigerant pipe, and a thickness of the base material sacrificial layer may be substantially equal to a thickness of the sacrificial layer.

With such a configuration, it is possible to reproduce the environment in which the refrigerant pipe corrodes, with the corrosion sensor. In this manner, it is possible to make a further improvement in the accuracy of the lifetime estimation of the refrigerant pipe.

In a refrigeration cycle device according to a sixth aspect of the present disclosure, the base material and the base material sacrificial layer may be plate-like materials.

With such a configuration, it is possible to dispose the corrosion sensor at a desirable position of the refrigeration cycle device.

In a refrigeration cycle device according to a seventh aspect of the present disclosure, a part of the refrigerant pipe may be used as the base material, and a part of the sacrificial layer may be used as the base material sacrificial layer.

With such a configuration, it is possible to detect the actual corrosion of the refrigerant pipe, and to make a further improvement in the accuracy of the lifetime estimation of the refrigerant pipe.

In a refrigeration cycle device according to an eighth aspect of the present disclosure, the processing unit may calculate a first sectional area of a cross section including the base material and the base material sacrificial layer on a regular basis, based on the electrical resistance measured by the corrosion sensor, and the lifetime of the refrigerant pipe may be estimated based on a decreasing tendency of the first sectional area due to a corrosion.

With such a configuration, the processing unit can estimate the lifetime of the refrigerant pipe based on a change in the electrical resistance.

In a refrigeration cycle device according to a ninth aspect of the present disclosure, the processing unit may further: calculate a sectional area ratio that is a ratio of the first sectional area with respect to a second sectional area, the second sectional area being the sectional area including the base material and the base material sacrificial layer before the refrigerant pipe is put in use; and estimate a point in time at which the sectional area ratio drops to a level equal to or lower than a threshold, as the lifetime of the refrigerant pipe.

With such a configuration, the processing unit can estimate the lifetime of the refrigerant pipe based on a change in the electrical resistance.

In the refrigeration cycle device according to a tenth aspect of the present disclosure, the threshold may be a ratio of the sectional area of the base material with respect to the second sectional area.

With such a configuration, it is possible to establish the point in time at which the base material sacrificial layer is completely removed as the lifetime of the refrigerant pipe. In this manner, it is possible to make a further improvement in the accuracy of the lifetime estimation of the refrigerant pipe containing aluminum as a main component.

In a refrigeration cycle device according to an eleventh aspect of the present disclosure, the processing unit may calculate an approximation formula of the sectional area ratio, and estimate the lifetime of the refrigerant pipe based on the approximation formula and the threshold.

With such a configuration, the processing unit can predict the lifetime of the refrigerant pipe based on a change in the electrical resistance, before the base material sacrificial layer is completely removed.

A refrigeration cycle device according to a twelfth aspect of the present disclosure may further include a display device that displays the lifetime of the refrigerant pipe, the lifetime being estimated by the processing unit.

With such a configuration, the result of determining the corrosion can be displayed to the user, and it is possible to encourage the user to take measures for the corrosion.

A refrigeration cycle device according to a thirteenth aspect of the present disclosure may further include a four-way valve that changes a direction in which the refrigerant flows through the refrigerant pipe.

With such a configuration, it is possible to improve the accuracy of a lifetime estimation of a refrigerant pipe in an air conditioner.

A refrigeration cycle system according to a fourteenth aspect of the present disclosure includes: a refrigeration cycle device includes a first heat exchanger, a compressor, a second heat exchanger, and an expansion mechanism; and a processing device that communicates with the refrigeration cycle device over a network, wherein the refrigeration cycle device includes: a refrigerant pipe that connects the first heat exchanger, the compressor, the second heat exchanger, and the expansion mechanism, through which a refrigerant is circulated, and that contains aluminum as a main component; a corrosion sensor that is disposed at least one of on an outer surface of the refrigerant pipe and around the refrigerant pipe, and that measures an electrical resistance; a storage that stores therein information of the electrical resistance measured by the corrosion sensor; and a first communicator that transmits the information of the electrical resistance stored in the storage over the network, the refrigerant pipe has a sacrificial layer on the outer surface of the refrigerant pipe, the sacrificial layer being less noble than the main component of the refrigerant pipe, and the processing device includes: a second communicator that receives the information of the electrical resistance over the network; and a processing unit that estimates a lifetime of the refrigerant pipe based on a change in the electrical resistance.

With such a configuration, it is possible to improve the accuracy of the lifetime estimation of the refrigerant pipe in the refrigeration cycle device, and to transmit the information of the electrical resistance detected by the corrosion sensor from the refrigeration cycle device to another device.

**(First embodiment)**

A refrigeration cycle device according to a first embodiment of the present disclosure will now be explained. In the following description, an air conditioner during a cooling operation will be described as an example of the refrigeration cycle device according to the first embodiment, but the refrigeration cycle device is not limited to the air conditioner.

**[Overall configuration]**

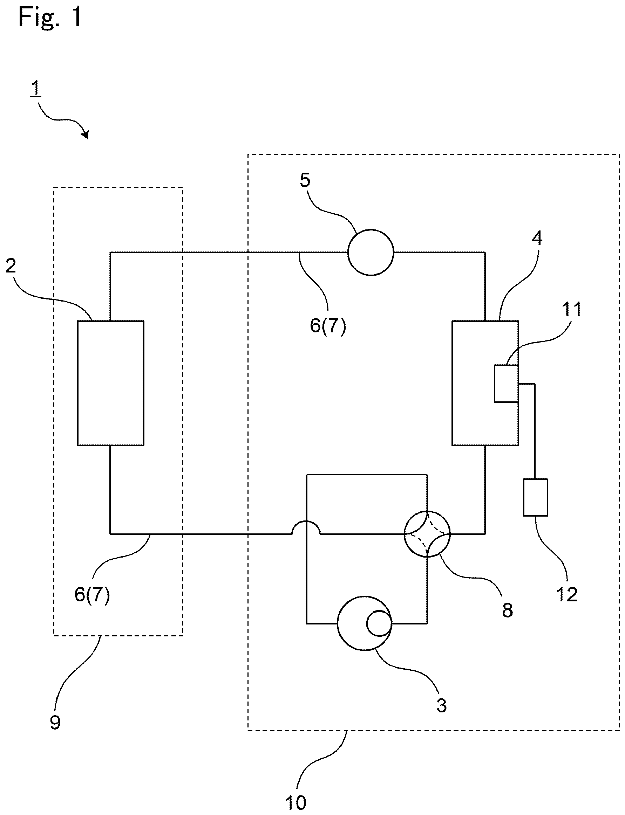

FIG. 1 is a schematic diagram illustrating an example of the refrigeration cycle device 1 according to the first embodiment of the present disclosure. As illustrated in FIG. 1, the refrigeration cycle device 1 includes a first heat exchanger 2, a compressor 3, a second heat exchanger 4, an expansion mechanism 5, a refrigerant pipe 6, a four-way valve 8, a corrosion sensor 11, and a processing unit 12.

In the refrigeration cycle device 1, the first heat exchanger 2 and a part of the refrigerant pipe 6 are included in an indoor unit 9, and are installed indoors. The compressor 3, the second heat exchanger 4, the expansion mechanism 5, the four-way valve 8, and a part of the refrigerant pipe 6 are included an outdoor unit 10, and are installed outdoors.

**<First heat exchanger>**

The first heat exchanger 2 includes fins, a refrigerant pipe 6 disposed inside the first heat exchanger 2, and an indoor fan. The fins include a plurality of thin metal plates, and are disposed in such a manner that surfaces of the respective metal plates extend in parallel with one another. The fins are used in exchanging heat with the air. The refrigerant pipe 6 is disposed orthogonally to the surfaces of the fins, is disposed in a bent manner so as to penetrate through the fins repeatedly, and causes the refrigerant flowing into the first heat exchanger 2 to evaporate. The indoor fan blows the air having its temperature adjusted by the first heat exchanger 2 to the indoor side.

**<Compressor>**

The compressor 3 is connected, by the refrigerant pipe 6, to the first heat exchanger 2, and to the four-way valve 8. The compressor 3 is used in compressing the refrigerant incoming from the refrigerant pipe 6 in the first heat exchanger 2.

**<Second heat exchanger>**

The second heat exchanger 4 includes fins, the refrigerant pipe 6 disposed inside second heat exchanger 4, and an outdoor fan. The fins have the same structure as the fins included in the first heat exchanger 2. The refrigerant pipe 6 is disposed orthogonally to the surfaces of the fins, is disposed in a bent manner so as to penetrate through the fins repeatedly, and condenses the refrigerant flowing into the second heat exchanger 4. The outdoor fan blows the air having its temperature adjusted by the second heat exchanger 4 to the outdoor side.

**<Expansion mechanism>**

The expansion mechanism 5 is connected, by the refrigerant pipe 6, to the first heat exchanger 2, and to the second heat exchanger 4. The expansion mechanism 5 is used in expanding the refrigerant incoming from the refrigerant pipe 6 in the second heat exchanger 4. The expansion mechanism 5 is an expansion valve, for example.

**<Refrigerant pipe>**

The refrigerant pipe 6 is disposed to connect the first heat exchanger 2, the compressor 3, the four-way valve 8, the second heat exchanger 4, and the expansion mechanism 5. The refrigerant pipe 6 makes up a part of the first heat exchanger 2 and the second heat exchanger 4. The refrigerant pipe 6 is disposed so as to connect the first heat exchanger 2, the compressor 3, the four-way valve 8, the second heat exchanger 4, and the expansion mechanism 5 in the order listed herein, for example.

The refrigerant pipe 6 has a channel through which a refrigerant flows, inside the refrigerant pipe 6, and allows the refrigerant to circulate. The refrigerant pipe 6 may have a hollow cylindrical shape, for example. The refrigerant pipe 6 may have a hollow polygonal cylindrical shape.

The refrigerant pipe 6 is made of an aluminum alloy that contains aluminum as a main component. The material making up the refrigerant pipe 6 contains 80 wt% or more aluminum. Preferably, the material making up the refrigerant pipe 6 contains aluminum by 90 wt% or more. More preferably, the material making up the refrigerant pipe 6 contains aluminum by 95 wt% or more. The material making up refrigerant pipe 6 may contain at least one of silicon, iron, manganese, and magnesium as an additive. Examples of the material making up the refrigerant pipe 6 include 1000, 3000, and 5000 series aluminum alloys. In the first embodiment, the refrigerant pipe 6 is made of 3003 aluminum alloy.

A sacrificial layer 7 is provided on an outer surface of the refrigerant pipe 6. The sacrificial layer 7 may be partially provided on the outer surface of the refrigerant pipe 6. For example, the sacrificial layer 7 may be provided by applying thermal spraying onto the refrigerant pipe 6. The sacrificial layer 7 may be joined in such a manner that the outer surface of the refrigerant pipe 6 is covered thereby. For example, the sacrificial layer 7 may be provided as a clad on the refrigerant pipe 6.

The sacrificial layer 7 is made of a material having a surface potential lower than that of aluminum. The sacrificial layer 7 may be an alloy layer having a surface potential lower than that of aluminum. For example, the sacrificial layer 7 is an aluminum-zinc alloy layer having a zinc concentration of 1 wt% or more and 15 wt% or less. When the sacrificial layer 7 is an aluminum-zinc alloy layer, the zinc concentration may change in the depth direction of the sacrificial layer 7. In the first embodiment, the sacrificial layer 7 is made from a layer of an aluminum - 2 wt% zinc alloy.

The thickness of the sacrificial layer 7 may be designed based on the environment where the refrigerant pipe 6 is used.

<Four-way valve>

The four-way valve 8 is connected, by the refrigerant pipe 6, to the compressor 3, to the first heat exchanger 2, and to the second heat exchanger 4. During the cooling operation, the four-way valve 8 sends the refrigerant coming out of the compressor 3 to the second heat exchanger 4. At the same time, the four-way valve 8 changes the direction in which the refrigerant flows, depending on the operation mode (cooling operation, heating operation) of the refrigeration cycle device 1.

<Corrosion Sensor>

The corrosion sensor 11 reproduces the corrosion of the refrigerant pipe 6, and measures a change in the electrical resistance of the corrosion sensor 11, the change being caused by the corrosion. The corrosion sensor 11 may quantitatively measure the electrical resistance on the ongoing basis, from when the use of the refrigeration cycle device 1 is started. For example, the corrosion sensor 11 measures the electrical resistance once in every hour.

The corrosion sensor 11 is disposed around the refrigerant pipe 6. Being "disposed around the refrigerant pipe 6" means that the corrosion sensor 11 is disposed on the refrigerant pipe 6 indirectly with some component interposed therebetween. When there is no condensation of dew on the refrigerant pipe 6, the corrosion sensor 11 may be disposed at a position around the refrigerant pipe 6 where the refrigerant temperature is the lowest. When there is high humidity and dew condensation on the refrigerant pipe 6, by contrast, the corrosion sensor 11 may be disposed at a position where water is likely to accumulate.

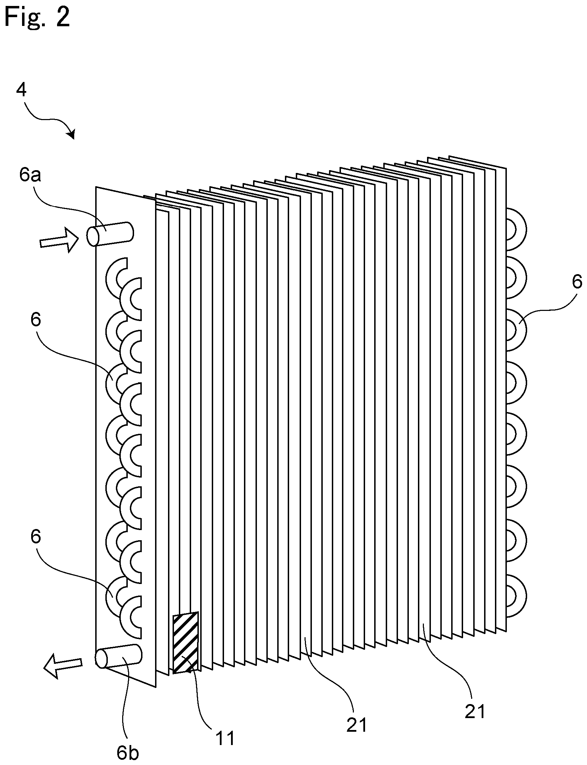

FIG. 2 is a schematic diagram of the second heat exchanger 4 according to the first embodiment. As illustrated in FIG. 2, the second heat exchanger 4 includes the refrigerant pipe 6, the fins 21, and the corrosion sensor 11. The corrosion sensor 11 is disposed around a refrigerant pipe 6b and fixed to the fin 21.

In the first embodiment, the corrosion sensor 11 is disposed around the refrigerant pipe 6b. During the cooling operation of the refrigeration cycle device 1, the refrigerant flows in the direction of the arrows illustrated in FIG. 2, and the temperature of the refrigerant pipe 6b is lower than the temperature of the refrigerant pipe 6a. When the corrosion sensor 11 is disposed around the refrigerant pipe 6b, because the temperature around the refrigerant pipe 6b is low, the sensitivity of the corrosion sensor 11 can be improved.

In the first embodiment, the corrosion sensor 11 is fixed to the fins 21. The corrosion sensor 11 is fixed to the fins 21 by using by a clip, a cable tie, welding, or an adhesive, for example. It is also possible to install the corrosion sensor 11 around the refrigerant pipe 6 by attaching a case to the fins 21 of the second heat exchanger 4 and inserting the corrosion sensor 11 thereinto.

The dimensions of the corrosion sensor 11 may be designed based on the place where and the method by which corrosion sensor 11 is installed.

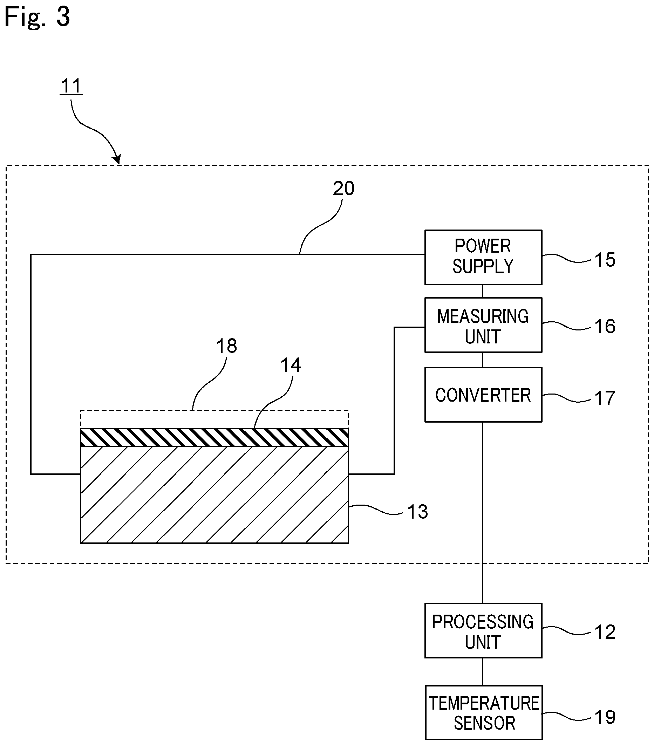

FIG. 3 is a sectional view of the corrosion sensor 11 according to the first embodiment. As illustrated in FIG. 3, the corrosion sensor 11 includes a base material 13, a base material sacrificial layer 14, a power supply 15, a measuring unit 16, a converter 17, and a conductive wire 20.

The main component of the base material 13 is the same as that of the refrigerant pipe 6. For example, the base material 13 is made of the same material as the material of which the refrigerant pipe 6 is made. In the first embodiment, the main component of the base material 13 is aluminum.

The base material 13 has a plate-like shape. The thickness of the base material 13 may be substantially the same as that of the refrigerant pipe 6. For example, the thickness of the base material 13 is 0.8 times or more and 1.2 times or less the thickness of the refrigerant pipe 6. Preferably, the thickness of the base material 13 is 0.9 times or more and 1.1 times or less than that of the refrigerant pipe 6.

The base material sacrificial layer 14 is laminated on one surface of the base material 13. It is also possible for the base material 13 to be exposed, even after the lamination of the base material sacrificial layer 14.

The base material sacrificial layer 14 is made of a material having a surface potential lower than that of the base material 13. Because the surface potential of the base material sacrificial layer 14 is less noble than that of the base material 13, the base material sacrificial layer 14 corrodes preferentially. When the base material sacrificial layer 14 corrodes, the base material sacrificial layer 14 becomes thinner, and a corroded portion 18 is formed in the base material sacrificial layer 14. The corroded portion 18 is a portion having the thickness reduced by the corrosion. The main component of the base material sacrificial layer 14 is the same as that of the sacrificial layer 7 of the refrigerant pipe 6. For example, the base material sacrificial layer 14 is made of the same material as that of which the sacrificial layer 7 is made. Therefore, with the base material sacrificial layer 14, it is possible to reproduce the corrosion of the sacrificial layer 7 of the refrigerant pipe 6. As a result, it is possible to estimate the lifetime of the refrigerant pipe 6 accurately, based on the corrosion of the base material sacrificial layer 14 included in the corrosion sensor 11. In the first embodiment, the base material sacrificial layer 14 is made from a layer of an aluminum - 2 wt% zinc alloy.

The base material sacrificial layer 14 has a plate-like shape. The thickness of the base material sacrificial layer 14 may be substantially the same as that of the sacrificial layer 7 of the refrigerant pipe 6. For example, the thickness of the base material sacrificial layer 14 is 0.8 times or more and 1.2 times or less the thickness of the sacrificial layer 7. Preferably, the thickness of the base material sacrificial layer 14 is 0.9 times or more and 1.1 times or less the thickness of the sacrificial layer 7. It is also possible for the base material sacrificial layer 14 to have a thickness smaller than that of the sacrificial layer 7. When the thickness of the base material sacrificial layer 14 is smaller than that of the sacrificial layer 7, the base material sacrificial layer 14 is used up before the sacrificial layer 7. Therefore, when the lifetime of the refrigerant pipe 6 is estimated based on the removal of the base material sacrificial layer 14, it is possible to estimate the lifetime of the refrigerant pipe 6 on the safer side. Estimating the lifetime of the refrigerant pipe 6 on the safer side means the lifetime of the refrigerant pipe 6 is estimated to have ended before the refrigerant pipe 6 becomes penetrated. By estimating the lifetime of the refrigerant pipe 6 on the safer side, it is possible to deal with the corrosion of the refrigerant pipe 6 more reliably, before the refrigerant pipe 6 becomes penetrated.

The power supply 15 generates a constant current flow in the base material 13 and the base material sacrificial layer 14. For example, the power supply 15 generates a current flow at 10 mA, for example.

The measuring unit 16 measures the voltage applied to the base material 13 and the base material sacrificial layer 14. The measuring unit 16 may measure the voltage intermittently. For example, the measuring unit 16 measures the voltage once in every hour. As the measurement method, any measurement method that can measure minute resistances of metal materials may be used. For example, four-terminal sensing is used.

The converter 17 converts the voltage measured by the measuring unit 16 into an electrical resistance. Specifically, the converter 17 converts the voltage into the electrical resistance of the base material 13 and the base material sacrificial layer 14 by dividing the voltage measured by the measuring unit 16 by the current generated by the power supply 15.

The conductive wire 20 is disposed between the power supply 15, the measuring unit 16, the converter 17, and the temperature sensor 19, all of which are, in turn, electrically connected by the conductive wire 20. The conductive wire 20 is made of an electrically conductive material. For example, the conductive wire 20 is made of copper.

<Temperature sensor>

The temperature sensor 19 measures a temperature around the corrosion sensor 11. Because electrical resistance has temperature dependency, it is possible to improve the measurement accuracy of the electrical resistance by correcting the electrical resistance with respect to the temperature. The temperature sensor 19 may measure the temperature intermittently. For example, the temperature sensor 19 makes the measurement at a measurement interval synchronized with that of the measuring unit 16.

<Processing unit>

Elements of the processing unit 12 may include, for example, a memory (not illustrated) storing therein a program for causing the elements of the processing unit 12 to function, and a processing circuit (not illustrated) corresponding to a processor, such as a central processing unit (CPU). The processor may implement the function of these elements by executing a program.

The processing unit 12 estimates the lifetime of the refrigerant pipe 6 based on the electrical resistance measured by the corrosion sensor 11. Specifically, the processing unit 12 calculates a first sectional area A1 of a cross section including the base material 13 and the base material sacrificial layer 14, and estimates the lifetime of the refrigerant pipe 6 based on a decreasing tendency of the first sectional area A1, caused by the corrosion. In the first embodiment, the base material sacrificial layer 14 and the base material 13 of the corrosion sensor 11 are made of the same materials as those of the sacrificial layer 7 and the refrigerant pipe 6, respectively. Therefore, the corrosion sensor 11 can reproduce the corrosion of the sacrificial layer 7 of the refrigerant pipe 6. In the manner described above, the processing unit 12 estimates the lifetime of the refrigerant pipe 6 based on the electrical resistance obtained by the corrosion sensor 11. The lifetime of the refrigerant pipe 6 also represents the lifetime of the refrigeration cycle device 1.

In the first embodiment, a sectional area ratio (A1/A0) is calculated by calculating a ratio between a first sectional area A1 of a cross section including base material 13 and the base material sacrificial layer 14, and a second sectional area A0 of a cross section including base material 13 and the base material sacrificial layer 14 before the use of the refrigerant pipe 6. "Before the use" herein means time before the refrigerant pipe 6 is exposed to an atmosphere containing moisture, and before the sacrificial layer 7 becomes corroded. In other words, the condition before the use of the refrigerant pipe 6 means a condition before the corrosion takes place in the refrigerant pipe 6. The processing unit 12 makes an estimation of the time T1 required for the sectional area ratio (A1/A0) to become equal to or less than a threshold S1, as the lifetime of the refrigerant pipe 6.

For example, the threshold S1 is a sectional area ratio (A1/A0) after the base material sacrificial layer 14 is completely removed. In other words, the threshold S1 is a sectional area ratio (A2/A0) obtained by calculating a ratio of the sectional area A2 of the base material 13, with respect to the second sectional area A0 of the cross section including the base material 13 and the base material sacrificial layer 14 before the use of the refrigerant pipe 6. The base material sacrificial layer 14 at the threshold S1 reproduces the corrosion of the sacrificial layer 7. Because the base material sacrificial layer 14 is removed, the processing unit 12 can presume that the sacrificial layer 7 on the refrigerant pipe 6 is also removed.

The processing unit 12 may keep calculating the sectional area from the electrical resistance, until the sectional area ratio (A1/A0) drops to a level equal to or lower than the threshold S1. The processing unit 12 may also calculate an approximation formula of the sectional area ratio (A1/A0) to extrapolate the sectional area ratio (A1/A0) of the base material sacrificial layer 14 and the base material 13. In this manner, it is possible to make a prediction of the point in time T1 at which the sectional area ratio (A1/A0) drops to a level equal to or lower than the threshold S1, that is, the lifetime of the refrigerant pipe 6. For example, the approximation formula can be calculated using the least squares method.

The processing unit 12 also corrects the electrical resistance measured by the corrosion sensor 11, based on the temperature measured by the temperature sensor 19. The temperature dependencies of the electrical resistivity of the materials used for the base material 13 and the base material sacrificial layer 14 are found and input to the processing unit 12 in advance. The electrical resistance is determined, based on the temperature dependency having been found in advance, using the temperature measured by the temperature sensor 19. Electrical resistivity has a tendency to increase as the temperature increases. When the base material 13 has electrical resistivity very different from that of the base material sacrificial layer 14, the base material 13 and the base material sacrificial layer 14 can be considered as forming a parallel circuit. In such a case, the measuring unit 16 measures the voltages of the base material 13 and the base material sacrificial layer 14, respectively, and the converter 17 converts the voltages into respective electrical resistances. The processing unit 12 then calculates combined resistance of the base material 13 and the base material sacrificial layer 14 to obtain the electrical resistance of the corrosion sensor 11.

The processing unit 12 is electrically connected to the corrosion sensor 11. The processing unit 12 may be disposed near the corrosion sensor 11.

[Operation]

An example of an operation of the refrigeration cycle device 1 will now be explained in detail.

The corrosion sensor 11 measures the electrical resistance of the base material sacrificial layer 14 and the base material 13. Specifically, the power supply 15 generates a constant current flow in the base material 13 and the base material sacrificial layer 14, and the measuring unit 16 measures the voltages applied to the base material 13 and the base material sacrificial layer 14. The converter 17 then converts the voltages into electrical resistances.

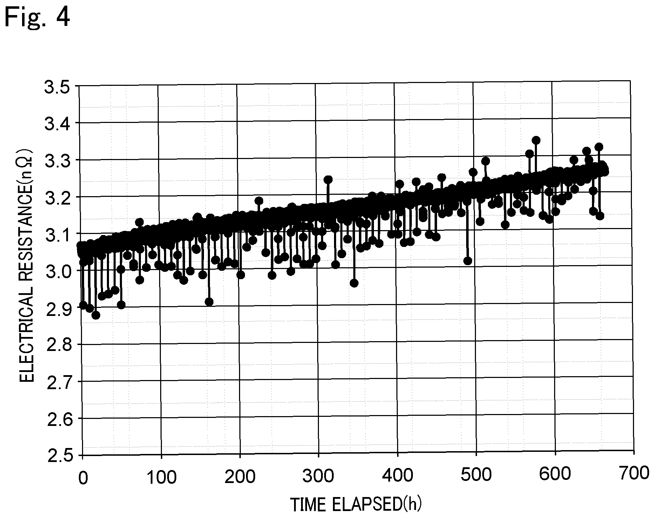

FIG. 4 is a graph illustrating a relationship between the electrical resistance detected by the corrosion sensor 11 and the time elapsed. The vertical axis represents the electrical resistance, and the horizontal axis represents the time elapsed.

As illustrated in FIG. 4, the electrical resistance increases as the time elapses more. As the time elapses further, the corrosion of the base material sacrificial layer 14 proceeds and the electrical resistance increases.

The processing unit 12 then calculates the first sectional area A1 of the cross section including the base material 13 and the base material sacrificial layer 14, based on the electrical resistance measured by the corrosion sensor 11. It is known that the electrical resistance R can be expressed using the following equation (1) including the electrical resistivity $\rho$, the length 1 of the base material sacrificial layer 14, and the first sectional area A1.

[Math 1]

$$R = \frac{\rho l}{A1} \quad \cdot \quad \cdot \quad \cdot \quad (1)$$

In the first embodiment, the sectional area ratio (A1/A0) is calculated by calculating the ratio between the first sectional area A1 of the cross section including base material 13 and the base material sacrificial layer 14, and a second sectional area A0 of a cross section including base material 13 and the base material sacrificial layer 14 before the use of the refrigerant pipe 6. The processing unit 12 also makes an estimation of the point in time T1 at which the sectional area ratio (A1/A0) becomes equal to or less than the threshold S1, as the end of the lifetime of the refrigerant pipe 6.

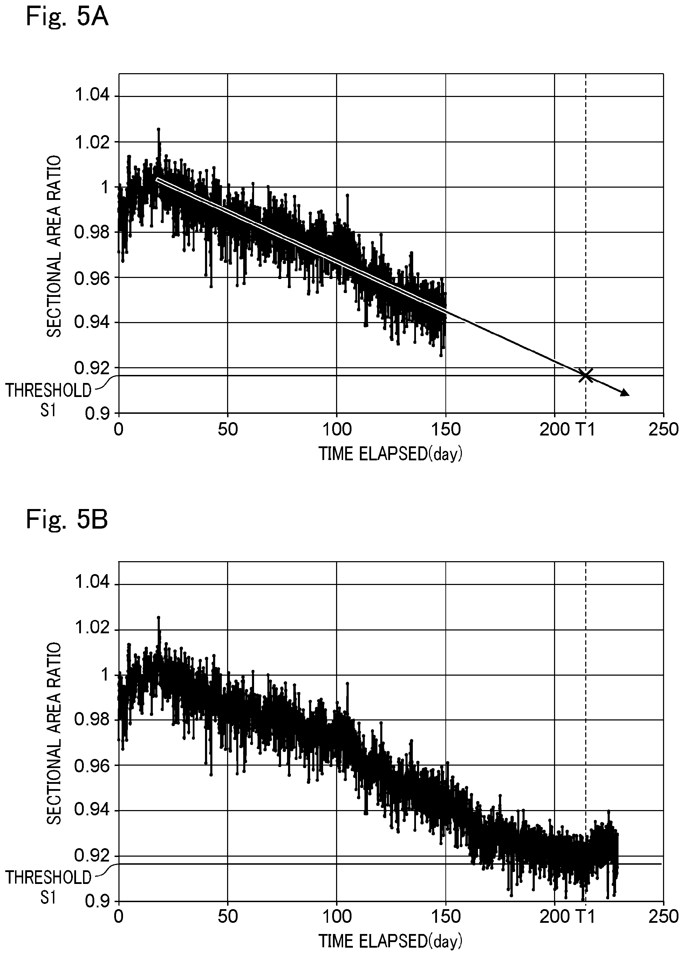

FIG. 5A illustrates a relationship between the sectional area ratio (A1/A0) calculated from the electrical resistance measured by the corrosion sensor 11 and the time elapsed. FIG. 5B is a graph illustrating a relationship between the sectional area ratio (A1/A0) and the time elapsed, after the time has elapsed further from the graph illustrated in FIG. 5A. Measurement conditions for the electrical resistance in FIGS. 5A and 5B will now be explained. The refrigeration cycle device 1 including a second heat exchanger 4 made of aluminum was installed in an ordinary house in Okinawa, and was set to continue a cooling operation with a room temperature setting of 26 °C. Meanwhile, the corrosion sensor 11 installed in the second heat exchanger 4 was subjected to a direct current of 10 mA, and the electrical resistance was measured, at an interval of one hour.

FIGS. 5A and 5B illustrate the threshold S1. In the first embodiment, the thickness of the base material 13 is 174 um, and the thickness of the base material sacrificial layer 14 is 16 um. The widths of the base material 13 and the base material sacrificial layer 14 are the same. Therefore, the threshold S1 in the first embodiment represents a ratio of the thickness of the base material 13 with respect to the sum of the thicknesses of the base material 13 and the base material sacrificial layer 14, and, therefore is 0.92. The point in time T1 at which the sectional area ratio (A1/A0) drops to 0.92 or lower, that is, the point in time when the base material sacrificial layer 14 is removed was estimated as the lifetime of the refrigerant pipe 6.

As indicated in FIG. 5A, based on information of the sectional area ratio (A1/A0) over 150 days, an approximation formula of the sectional area ratio (A1/A0) was calculated using the least squares method, and the time T1 required for the sectional area ratio (A1/A0) to drop to a level equal to the threshold S1 or lower was predicted. In FIG. 5A, the lifetime of the refrigerant pipe 6 was predicted as 215 days.

The sectional area ratio (A1/A0) reached the threshold S1 on the 215th day, as indicated in FIG. 5B. Therefore, the estimation in FIG. 5A was validated. In this manner, by calculating the approximation formula of the sectional area ratio (A1/A0), the lifetime of the refrigerant pipe 6 can be predicted accurately.

[Advantageous effects]

The refrigeration cycle device 1 according to the first embodiment has following advantageous effects.
The refrigeration cycle device 1 includes the first heat exchanger 2, the compressor 3, the second heat exchanger 4, and the expansion mechanism 5. The refrigerant pipe 6 connects the first heat exchanger 2, the compressor 3, the second heat exchanger 4, and the expansion mechanism 5, is configured to circulate the refrigerant, and contains aluminum as a main component. The refrigerant pipe 6 includes, on the outer surface of refrigerant pipe 6, the sacrificial layer 7 that is less noble than the main component of the refrigerant pipe 6.

The refrigeration cycle device 1 also includes the corrosion sensor 11 and the processing unit 12. The corrosion sensor 11 is disposed around the refrigerant pipe 6, and measures an electrical resistance. The processing unit 12 estimates the lifetime of the refrigerant pipe 6 based on a change in the electrical resistance measured by the corrosion sensor 11.

With this configuration, it is possible to improve the accuracy of the lifetime estimation of the refrigerant pipe 6. Specifically, because the electrical resistance is measured using the corrosion sensor 11, and the lifetime of the refrigerant pipe 6 is estimated based on a change in the measured electrical resistance, it is possible to improve the accuracy of the lifetime estimation.

By disposing the corrosion sensor 11 around the refrigerant pipe 6, the accuracy of the lifetime estimation of the refrigerant pipe 6 can be further improved. Specifically, by disposing the corrosion sensor 11 around the refrigerant pipe 6, it is possible to match the corroding environment of the corrosion sensor 11 and to that of the refrigerant pipe 6. In this manner, the temperature of the corrosion sensor 11 is synchronized with the temperature of the refrigerant pipe 6, for example. By establishing temperature synchronization, the corrosion sensor 11 establishes synchronization of the relative humidity of the refrigerant pipe 6. By reproducing dew condensation on the refrigerant pipe 6, the corrosion of the refrigerant pipe 6 can be reproduced using the corrosion sensor 11, and the accuracy of the lifetime estimation of the refrigerant pipe 6 can be improved.

The refrigeration cycle device 1 further includes a temperature sensor 19 that measures the temperature around the corrosion sensor 11. The processing unit 12 corrects the electrical resistance measured by the corrosion sensor 11 based on the temperature measured by the temperature sensor 19.

With such a configuration, it is possible to correct the electrical resistance measured by the corrosion sensor 11 using the temperature around the corrosion sensor 11. By calculating the sectional area ratio (A1/A0) based on the corrected electrical resistance, the estimation accuracy of the lifetime of the refrigerant pipe 6 based on the sectional area ratio (A1/A0) can be further improved.

The corrosion sensor 11 includes the base material 13, the base material sacrificial layer 14, the power supply 15, the measuring unit 16, and the converter 17. The base material sacrificial layer 14 is provided on the surface of the base material 13, and has a surface potential lower than that of the base material 13. The power supply 15 generates a constant current flow in the base material 13 and the base material sacrificial layer 14. The measuring unit 16 measures a voltage applied to the base material 13 and the base material sacrificial layer 14. The converter 17 converts the voltage measured by the measuring unit 16 into an electrical resistance. The main component of the base material 13 is the same as that of the refrigerant pipe 6, and the main component of the base material sacrificial layer 14 is the same as that of the sacrificial layer 7.

With such a configuration, the corrosion sensor 11 can measure the electrical resistance of the base material 13 and the base material sacrificial layer 14, and estimate the lifetime of the refrigerant pipe 6 based on a change in the electrical resistance.

In addition, because the main component of the base material sacrificial layer 14 is the same as that of the sacrificial layer 7, the estimation accuracy of the lifetime of the refrigerant pipe 6 can be further improved. In the first embodiment, the base material sacrificial layer 14 and the sacrificial layer 7 are made from a layer of an aluminum - 2 wt% zinc alloy. Therefore, the base material sacrificial layer 14 exhibits the same material characteristics as the sacrificial layer 7. As a result, the corrosion of the sacrificial layer 7 can be reproduced by the base material sacrificial layer 14, and the lifetime of the refrigerant pipe 6 can be estimated based on the formation of the corroded portion 18, resultant of the corrosion of the base material sacrificial layer 14, and on a change in the electrical resistance. As a result, it is possible to make a further improvement in the accuracy of the lifetime estimation of the refrigerant pipe 6. In addition, because the base material sacrificial layer 14 and the sacrificial layer 7 have the same material characteristics, their surfaces have the same water repellency, for example. Hence, the dew condensation on the sacrificial layer 7 can be reproduced on the base material sacrificial layer 14. Therefore, the corrosion detection accuracy can be further improved.

The base material 13 has substantially the same thickness as the refrigerant pipe 6, and the base material sacrificial layer 14 has substantially the same thickness as the sacrificial layer 7.

With such a configuration, it is possible to make a further improvement in the accuracy of the lifetime estimation of the refrigerant pipe 6. Specifically, because the base material 13 has substantially the same thickness as the refrigerant pipe 6, and the base material sacrificial layer 14 has substantially the same thickness as the sacrificial layer 7, the temperature of and the dew condensation on the refrigerant pipe 6 can be easily reproduced in the corrosion sensor 11. Therefore, the corrosion of the refrigerant pipe 6 can be reproduced by the corrosion sensor 11, and the estimation accuracy of the lifetime can be further improved.

Furthermore, because the base material 13 has substantially the same thickness as the refrigerant pipe 6, and the base material sacrificial layer 14 has substantially the same thickness as the sacrificial layer 7, it is possible to reproduce the progress of the corrosion of the refrigerant pipe 6 while the thickness of the sacrificial layer 7 decreases, using the base material sacrificial layer 14 and the base material 13. The sacrificial layer 7 wears out almost uniformly. However, as the remainder of the sacrificial layer 7 becomes smaller and the underlying layer becomes exposed, consumption of the sacrificial layer 7 and the refrigerant pipe 6 accelerates, because the underlying layer has a higher potential and a contact potential difference is generated thereby. Therefore, by setting the thickness of the base material 13 substantially the same as that of the refrigerant pipe 6, and setting the thickness of the base material sacrificial layer 14 substantially the same as that of the sacrificial layer 7, it is possible to reproduce the corrosion of the refrigerant pipe 6 using the corrosion sensor 11, so that the accuracy of the lifetime estimation can be further improved.

The base material 13 and the base material sacrificial layer 14 are plate-like materials.

With such a configuration, it is possible to dispose and to install the corrosion sensor 11 at a desirable position of the refrigeration cycle device 1. For example, the corrosion sensor 11 can be fixed to the outside of the second heat exchanger 4 using a cable tie.

The processing unit 12 calculates the first sectional area A1 of the cross section including the base material 13 and the base material sacrificial layer 14, based on the electrical resistance measured by the corrosion sensor 11, on a regular basis. The lifetime of the refrigerant pipe 6 is estimated based on the decreasing tendency of the first sectional area A1 due to the corrosion.

With such a configuration, the lifetime of the refrigerant pipe 6 containing aluminum as a main component can be estimated based on the electrical resistance measured by the corrosion sensor 11.

The processing unit 12 further calculates the sectional area ratio (A1/A0) that is the ratio of the first sectional area A1, with respect to the second sectional area A0 of the cross section including the base material 13 and the base material sacrificial layer 14 before the use of the refrigerant pipe 6. The point in time at which the sectional area ratio (A1/A0) drops to a level equal to or lower than the threshold is estimated as the lifetime of the refrigerant pipe 6.

With such a configuration, the lifetime of the refrigerant pipe 6 containing aluminum as a main component can be estimated based on the electrical resistance measured by the corrosion sensor 11.

The threshold is the ratio of the sectional area A2 of the base material 13 with respect to the second sectional area A0.

With such a configuration, the point in time at which the base material sacrificial layer 14 is removed can be estimated as the point in time at which the sacrificial layer 7 is removed, and can be estimated as the lifetime of the refrigerant pipe 6. In this manner, it is possible to make a further improvement in the accuracy of the lifetime estimation of the refrigerant pipe 6 containing aluminum as a main component.

Furthermore, because the refrigerant pipe 6 does not corrode until the sacrificial layer 7 is completely removed, it is possible to cope with the corrosion using the lifetime estimation based on the threshold, before the corrosion of the refrigerant pipe 6 takes place.

The processing unit 12 calculates an approximation formula of the sectional area ratio (A1/A0), and predicts the lifetime of the refrigerant pipe 6 based on the approximation formula and the threshold S1.

With such a configuration, the lifetime of the refrigerant pipe 6 can be predicted without continuing to calculate the sectional area ratio (A1/A0) until the sectional area ratio (A1/A0) drops to a level equal to or lower than the threshold S1. As a result, it is possible to suppress the power consumption of the corrosion sensor 11 and the processing unit 12.

The refrigeration cycle device 1 further includes the four-way valve 8 that changes the direction in which the refrigerant flows, in the refrigerant pipe 6.

With such a configuration, it is possible to improve the accuracy of a corrosion detection in an air conditioner, such as the refrigeration cycle device 1 according to the first embodiment, during the cooling operation.

Explained in the first embodiment is an example of the refrigeration cycle device 1 as an air conditioner during the cooling operation, but the present disclosure is not limited thereto. For example, the refrigeration cycle device 1 may be an air conditioner during a heating operation. The refrigeration cycle device 1 may also be a refrigeration device such as a refrigerator.

Explained in the first embodiment is an example in which the refrigerant pipe 6 is disposed in a manner connecting the first heat exchanger 2, the compressor 3, the four-way valve 8, the second heat exchanger 4, and the expansion mechanism 5, but the refrigerant pipe 6 may connect other elements such as an accumulator and a valve.

Explained in the first embodiment is an example in which the corrosion sensor 11 is fixed to the fins 21 of the second heat exchanger 4 around the refrigerant pipe 6, but the present disclosure is not limited thereto. The corrosion sensor 11 may be disposed at least one of on the outer surface of the refrigerant pipe 6 and around the refrigerant pipe 6. The corrosion sensor 11 may be disposed on the outer surface of the refrigerant pipe 6. By bringing the corrosion sensor 11 and the refrigerant pipe 6 into contact with each other, the temperatures of the corrosion sensor 11 and the refrigerant pipe 6 can be synchronized with each other.

Alternatively, the corrosion sensor 11 may be disposed on the outer surface of a dummy pipe that is disposed around the refrigerant pipe 6, and through which no refrigerant passes. The dummy pipe can be disposed nearby the refrigerant pipe 6, so that the temperature of the corrosion sensor 11 can be synchronized with that of the refrigerant pipe 6 via the dummy pipe.

Explained in the first embodiment is an example in which the corrosion sensor 11 is disposed around the refrigerant pipe 6 of the second heat exchanger 4, but the present disclosure is not limited thereto. The corrosion sensor 11 may be disposed on the refrigerant pipe 6 installed in at least one of the first heat exchanger 2 and the second heat exchanger 4. For example, the corrosion sensor 11 may be disposed on the outer surface of the refrigerant pipe 6 of the second heat exchanger 4. Alternatively, the corrosion sensors 11 may be disposed on the refrigerant pipe 6 in both of the first heat exchanger 2 and the second heat exchanger 4.

Alternatively, the corrosion sensor 11 may be disposed in another part of the refrigerant pipe 6.

Explained in the first embodiment is an example in which the refrigeration cycle device 1 includes one corrosion sensor 11, but the present disclosure is not limited thereto. The refrigeration cycle device 1 may include one or more corrosion sensors 11.

Explained in the first embodiment is an example in which the main component making up the base material 13 is aluminum, but the present disclosure is not limited thereto. The material making up the base material 13 may be any material having a surface potential nobler than that of the base material sacrificial layer 14. Furthermore, the base material 13 may be made of any material capable of reproducing the corrosion of the refrigerant pipe 6.

Explained in the first embodiment is an example in which the power supply 15 generates a constant current flow, and the measuring unit 16 applied to the base material 13 and the base material sacrificial layer 14 measures the voltage, but the present disclosure is not limited thereto. The power supply 15 may apply a constant voltage to the base material 13 and the base material sacrificial layer 14, and the measuring unit 16 may measure the resultant current. In such a case, the converter 17 divides the voltage applied by the power supply 15, by the current measured by the measuring unit 16 to calculate the electrical resistance of the base material 13 and the base material sacrificial layer 14.

Explained in the first embodiment is an example in which the lifetime of the refrigerant pipe 6 is estimated based on the first sectional area A1 and the sectional area ratio (A1/A0) of the cross section including the base material 13 and the base material sacrificial layer 14, but the present disclosure is not limited thereto. For example, the lifetime of the refrigerant pipe 6 may be estimated based on the thickness of the base material sacrificial layer 14. Specifically, when the base material sacrificial layer 14 corrodes, the corroded portion 18 is formed. As a result, the thickness of the base material sacrificial layer 14 decreases. The lifetime of the refrigerant pipe 6 may then be estimated based on a change in the electrical resistance due to a decrease in the thickness of the base material sacrificial layer 14.

Explained in the first embodiment is an example in which the threshold S1 corresponds to the sectional area ratio (A1/A0) obtained by taking the ratio of the first sectional area A1 with respect to the second sectional area A0, but the present disclosure is not limited thereto. The threshold S1 may be lower or higher than the sectional area ratio (A1/A0). For example, by setting the threshold S1 to be higher than the sectional area ratio (A1/A0), the lifetime of the refrigerant pipe 6 can be estimated before the base material sacrificial layer 14 is used up. Furthermore, when the threshold S1 is higher than the sectional area ratio (A1/A0), and the thickness of the base material sacrificial layer 14 is smaller than that of the sacrificial layer 7, it is possible to estimate the lifetime of the refrigerant pipe 6 on the safer side, before the sacrificial layer 7 is used up. By estimating the lifetime of the refrigerant pipe 6 on the safer side, it is possible to deal with the corrosion of the refrigerant pipe 6 more reliably, before the refrigerant pipe 6 becomes penetrated. By setting the threshold S1 lower than the sectional area ratio (A1/A0), use of the refrigerant pipe 6 can be extended.

Explained in the first embodiment is an example in which the temperature sensor 19 is independent from the corrosion sensor 11, but the present disclosure is not limited thereto. The temperature sensor 19 may be internalized in the corrosion sensor 11. The temperature sensor 19 may also be internalized in the processing unit 12.

Explained in the first embodiment is an example in which the corrosion sensor 11 includes the temperature sensor 19, but the present disclosure is not limited thereto. For example, a resistmetry corrosion monitoring (RCM) sensor 30, including a reference unit 31 instead of the temperature sensor 19, may be used as the corrosion sensor 11, as will be described later in a first modification.

(First modification)

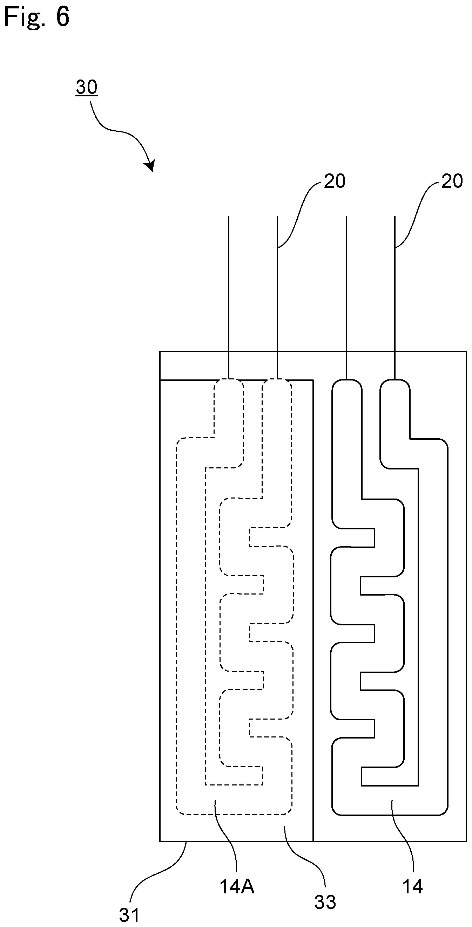

FIG. 6 is a schematic diagram of an RCM sensor 30. The RCM sensor 30 includes the base material sacrificial layer 14, the base material 13, not illustrated, as being hidden under the base material sacrificial layer 14, the conductive wire 20, and the reference unit 31. The conductive wire 20 forms independent circuits of the base material 13 and of the reference unit 31, respectively.

The reference unit 31 includes a base material 13A and a base material sacrificial layer 14A that are symmetric with the base material 13 and the base material sacrificial layer 14, respectively, and includes a protection layer 33 on top of the base material sacrificial layer 14A. The base material 13A is not illustrated because it is hidden under the base material sacrificial layer 14A. Because the RCM sensor 30 has the protection layer 33, the base material sacrificial layer 14A on the reference unit 31 does not corrode and become used up.

By using the reference unit 31, it is possible to cancel out the temperature dependency of the electrical resistivity. Specifically, by taking the ratio between the electrical resistance measured at the base material 13 and the base material sacrificial layer 14, and the electrical resistance measured at the reference unit 31, it is possible to cancel out the effect of the electrical resistivity having the temperature dependency.

The protection layer 33 is in close contact with the base material sacrificial layer 14A. The protection layer 33 is made of resin, for example.

With such a configuration, it is possible to cancel out the temperature dependency of the electrical resistivity, and to measure the electrical resistance of the base material 13 and the base material sacrificial layer 14 easily and accurately. In this manner, it is possible to make a further improvement in the accuracy of the lifetime estimation of the refrigerant pipe 6. Furthermore, the temperature sensor 19 in the corrosion sensor 11 can be omitted, so that it is possible to achieve space saving.

(Second embodiment)

A refrigeration cycle device according to a second embodiment of the present disclosure will now be explained. In the second embodiment, difference with respect to the first embodiment will be mainly explained. In the second embodiment, the same or equivalent elements as those according to the first embodiment will be explained by assigning the same reference numerals thereto. In the second embodiment, descriptions that are redundant with those in the first embodiment will be omitted.

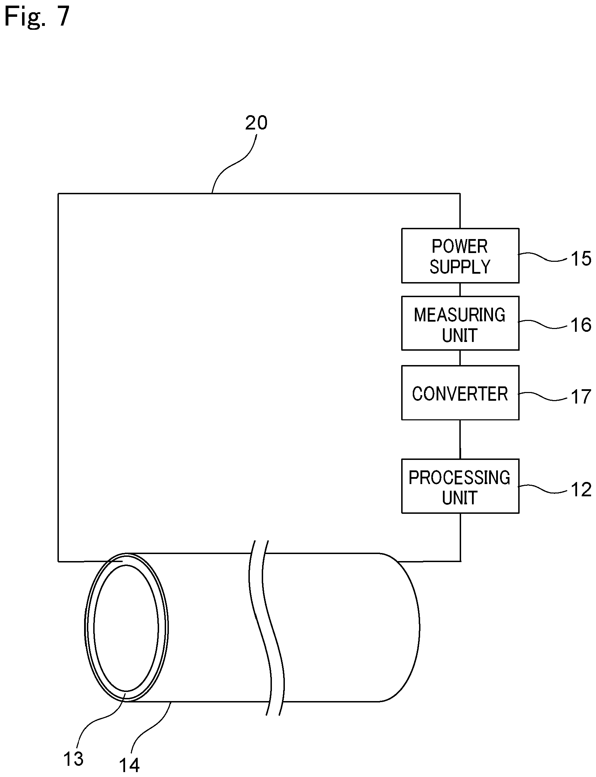

FIG. 7 is a schematic diagram of a corrosion sensor 11A according to the second embodiment of the present disclosure.

The second embodiment is different from the first embodiment in that, in the corrosion sensor 11A, a part of the refrigerant pipe 6 is used as the base material 13, and a part of the sacrificial layer 7 is used as the base material sacrificial layer 14.

In the second embodiment, the refrigeration cycle device 1 is the same as that according to the first embodiment, unless otherwise specified.

As illustrated in FIG. 7, a part of the refrigerant pipe 6 is used as the base material 13 of the corrosion sensor 11A, and the conductive wire 20 is connected to the base material 13. The refrigerant pipe 6 providing the base material 13 may be curved. The refrigerant pipe 6 serving as the base material 13 may be the refrigerant pipe 6 disposed in the second heat exchanger 4, for example.

A part of the sacrificial layer 7 is used as the base material sacrificial layer 14, and is disposed on the outer surface of the base material 13. In the second embodiment, the thickness of the base material sacrificial layer 14 is constant across the outer circumferential direction of the base material 13.

[Advantageous effects]

A part of the refrigerant pipe 6 is used as the base material 13, and a part of the sacrificial layer 7 is used as the base material sacrificial layer 14.

With such a configuration, the electrical resistance of the sacrificial layer 7 can be measured directly, so that the estimation accuracy of the lifetime of the refrigerant pipe 6 can be further improved. In the second embodiment, the corrosion sensor 11A can estimate the lifetime of the refrigerant pipe 6 directly. In addition, it is possible to reduce the number of components, and to achieve space saving.

Explained in the second embodiment is an example in which the thickness of the base material sacrificial layer 14 is constant across the outer circumferential direction of the base material 13, but the present disclosure is not limited thereto. The thickness of the base material sacrificial layer 14 may vary in the outer circumferential direction of the base material 13. In such a case, an average thickness of the base material sacrificial layer 14 is used in calculating the sectional areas of the base material 13 and the base material sacrificial layer 14 based on the electrical resistance. For example, when the base material sacrificial layer 14 is thermally sprayed onto the base material 13, the thickness of the resultant base material sacrificial layer 14 varies in the outer circumferential direction of the base material 13.

Explained in the second embodiment is an example in which the refrigeration cycle device 1 includes one corrosion sensor 11A, but the present disclosure is not limited thereto. The refrigeration cycle device 1 may include one or more corrosion sensors 11A.

Explained in the second embodiment is an example in which the refrigerant pipe 6 has a cylindrical shape, but the present disclosure is not limited thereto. The refrigerant pipe 6 may have a rectangular tubular shape, for example. In such a case, one face of the rectangular tube of the refrigerant pipe 6 may be used as the corrosion sensor 11A. In other words, the corrosion sensor 11A may have a plate-like shape.

(Third embodiment)

A refrigeration cycle device according to a third embodiment of the present disclosure will now be explained. In the third embodiment, difference with respect to the first embodiment will be mainly explained. In the third embodiment, the same or equivalent elements as those according to the first embodiment will be explained by assigning the same reference numerals thereto. In the third embodiment, descriptions that are redundant with those in the first embodiment will be omitted.

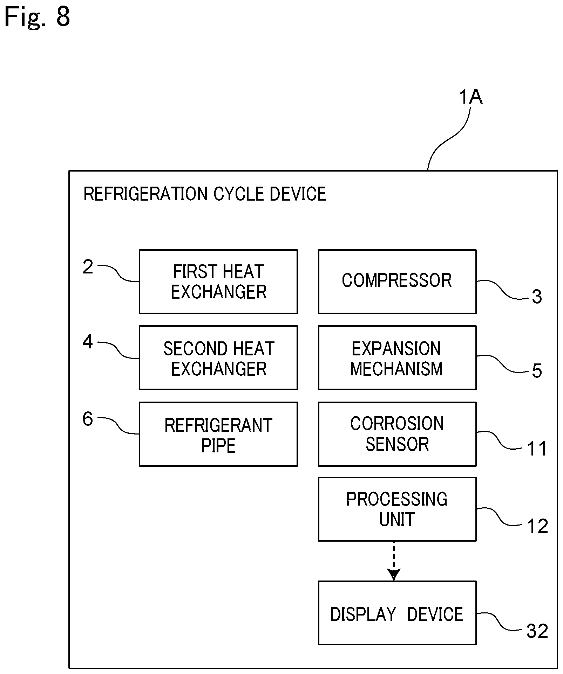

FIG. 8 is a block diagram of the refrigeration cycle device 1A according to the third embodiment of the present disclosure.

The third embodiment is different from the first embodiment in that refrigeration cycle device 1A includes a display device 32.

In the third embodiment, the refrigeration cycle device 1A is the same as the refrigeration cycle device 1 according to the first embodiment, unless otherwise specified.

The display device 32 displays the estimation result of the lifetime of the refrigerant pipe 6, estimated by the processing unit 12. The display device 32 may also display the time from the display time to the end of the lifetime of the refrigerant pipe 6, as well as the estimation result of the lifetime of the refrigerant pipe 6.

The display device 32 includes a display, a communicator, a memory that stores therein a program, and a processing circuit (not illustrated) that corresponds to a processor such as a central processing unit (CPU). The processor may implement the function of these elements by executing the program. The processing unit 12 also includes a communicator, correspondingly to the communicator of the display device 32.

The communicator in the processing unit 12 transmits a result of a lifetime estimation. The communicator in the display device 32 receives the lifetime estimation result from the processing unit 12. Each of the communicators in the display device 32 and the processing unit 12 includes a circuit that performs transmission to the display device 32 in accordance with a predetermined wireless communication standard (e.g., LAN, Wi-Fi (registered trademark), and Bluetooth (registered trademark)).

The display shows the lifetime estimation result. The display is disposed at a position that makes it visible to a user of the refrigeration cycle device 1A. For example, the display is disposed outside the indoor unit 9.

[Advantageous effects]

The display device 32 displays the lifetime of the refrigerant pipe 6, estimated by the processing unit 12.

With such a configuration, it is possible to display the result of the lifetime estimation of the refrigerant pipe 6 to the user of the refrigeration cycle device 1A. Therefore, by informing and prompting the user that the refrigerant pipe 6 needs to be replaced or repaired, it is possible to take care of the refrigerant pipe 6 before the refrigerant pipe 6 becomes penetrated.

Explained in the third embodiment is an example in which the refrigeration cycle device 1A includes the display device 32, but the present disclosure is not limited thereto. It is also possible for the display device 32 not to be included as a component of the refrigeration cycle device 1A. The display device 32 may be a display that is independent from the refrigeration cycle device 1A. A display on a remote controller of the refrigeration cycle device 1A may function as the display device 32, for example. The refrigeration cycle device 1A causes the communicator to transmit the information of the lifetime estimation result to the remote controller. The remote controller may then receive the information of the lifetime estimation result from the communicator, and display the lifetime estimation result on the display of the remote controller. It is also possible for a display of the smartphone to function as the display device 32. Specifically, the communicator in the refrigeration cycle device 1A may communicate with the smartphone so that the lifetime estimation result is displayed on the smartphone. For example, an application corresponding to the refrigeration cycle device 1A may be provided to the smartphone, and the lifetime estimation result may be displayed on the smartphone via the application.

Furthermore, the display device 32 is not limited to a visual display, and may be a speaker that issues a warning sound. For example, when the refrigerant pipe 6 reaches its lifetime, the display device 32 may emit a warning sound.

Explained in the third embodiment is an example in which the result of the lifetime estimation of the refrigerant pipe 6 is displayed on the display, but the present disclosure is not limited thereto. The display device 32 may also display other information. For example, the display device 32 may also display the thickness of the sacrificial layer 7, as well as the lifetime estimation result of the refrigerant pipe 6.

Explained in the third embodiment is an example in which the processing unit 12 performs communication in accordance with a wireless communication standard, but the present disclosure is not limited thereto. The processing unit 12 may also perform the communication in accordance with a wired communication standard. For example, the processing unit 12 communicates via USB, HDMI (registered trademark), and serial peripheral interface (SPI).

Explained in the third embodiment is an example of the first embodiment provided with the display device 32, but the present disclosure is not limited thereto. The display device 32 may be provided in the second embodiment and the first modification.

(Fourth embodiment)

A refrigeration cycle system 41 according to a fourth embodiment of the present disclosure will now be explained. In the fourth embodiment, difference with respect to the first embodiment will be mainly explained. In the fourth embodiment, the same or equivalent elements as those according to the first embodiment will be explained by assigning the same reference numerals thereto. In the fourth embodiment, descriptions that are redundant with those in the first embodiment will be omitted.

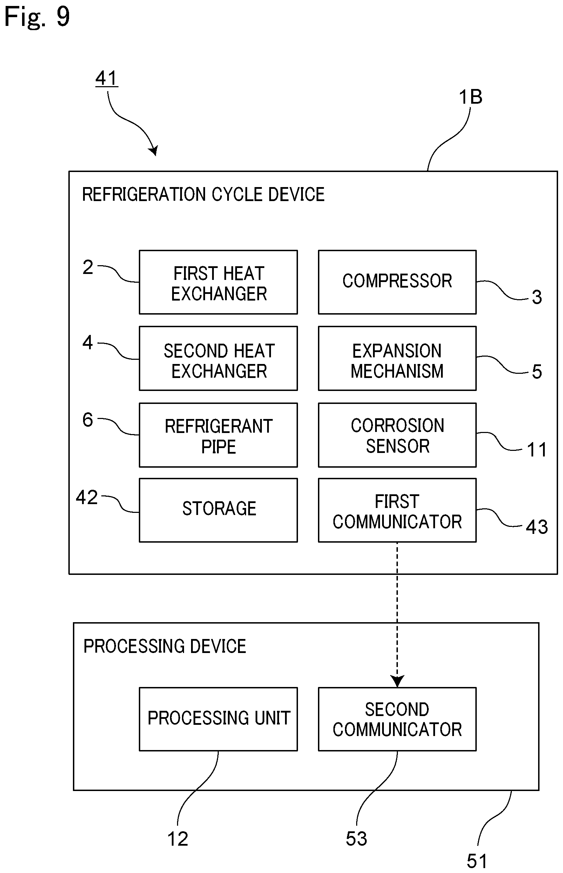

FIG. 9 is a block diagram of a refrigeration cycle system 41 according to the fourth embodiment of the present disclosure.

The fourth embodiment is different from the first embodiment in that it relates to a refrigeration cycle system 41 which includes a refrigeration cycle device 1B.

In the fourth embodiment, the refrigeration cycle device 1B is the same as the refrigeration cycle device 1 according to the first embodiment, unless otherwise specified.

[Overall configuration]

As illustrated in FIG. 9, the refrigeration cycle system 41 includes the refrigeration cycle device 1B and a processing device 51.

<Refrigeration cycle device>

The refrigeration cycle device 1B includes the first heat exchanger 2, the compressor 3, the second heat exchanger 4, the expansion mechanism 5, the refrigerant pipe 6, the corrosion sensor 11, a storage 42, and a first communicator 43.

<Storage>

The storage 42 stores therein information of the electrical resistance of the base material 13 and the base material sacrificial layer 14 measured by the corrosion sensor 11. The storage 42 may be, for example, a RAM, a ROM, an EEPROM, a flash memory or other memory technology, a CD-ROM, a DVD or other optical disc storage, a magnetic cassette, a magnetic tape, a magnetic disk storage or any other magnetic storage device.

<First communicator>

The first communicator 43 transmits the information stored in the storage 42 over the network. Specifically, the first communicator 43 transmits information of the electrical resistance to the processing device 51 over the network. The first communicator 43 includes a circuit that performs transmission to the second communicator 53 included in the processing device 51 in accordance with a predetermined communication standard (e.g., LAN, Wi-Fi (registered trademark), and Bluetooth (registered trademark)) .

<Processing device>

The processing device 51 includes the processing unit 12 and the second communicator 53. The processing device 51 is a computer. The processing device 51 is a server or a cloud, for example.

<Second communicator>

The second communicator 53 receives the information of the electrical resistance transmitted by the first communicator 43 over the network. The second communicator 53 includes a circuit that performs receiving from the first communicator 43 in the refrigeration cycle device 1B, in accordance with a predetermined communication standard (e.g., LAN, Wi-Fi (registered trademark), and Bluetooth (registered trademark)).

The processing unit 12 estimates the lifetime of the refrigerant pipe 6 based on the information of the electrical resistance received by the second communicator 53.

[Operation]

In the refrigeration cycle device 1B, the corrosion sensor 11 measures electrical resistance, and information of the electrical resistance is stored in the storage 42. The first communicator 43 transmits the information of the electrical resistance stored in the storage 42, to the second communicator 53. In the processing device 51, the information of the electrical resistance is received by the second communicator 53. The processing unit 12 estimates the lifetime of the refrigerant pipe 6 in the refrigeration cycle device 1B based on the information of the electrical resistance received by the second communicator 53.

[Advantageous effects]

The refrigeration cycle system 41 according to one aspect of the present disclosure includes the refrigeration cycle device 1B and the processing device 51. The refrigeration cycle device 1B includes the first heat exchanger 2, the compressor 3, the second heat exchanger 4, and the expansion mechanism 5. The processing device 51 communicates with the refrigeration cycle device 1B over a network. The refrigeration cycle device 1B further includes the refrigerant pipe 6, the corrosion sensor 11, the storage 42, and the first communicator 43. The refrigerant pipe 6 connects the first heat exchanger 2, the compressor 3, the second heat exchanger 4, and the expansion mechanism 5, is configured to circulate the refrigerant, and contains aluminum as a main component. The refrigerant pipe 6 includes, on the outer surface of refrigerant pipe 6, the sacrificial layer 7 that is less noble than the main component of the refrigerant pipe 6. The corrosion sensor 11 is disposed at least one of on the outer surface of the refrigerant pipe 6 and around the refrigerant pipe 6, and measures the electrical resistance. The storage 42 stores therein information of the electrical resistance detected by the corrosion sensor 11. The first communicator 43 transmits the information of the electrical resistance stored in the storage 42 over the network. The processing device 51 includes the second communicator 53 and the processing unit 12. The second communicator 53 receives the information of the electrical resistance over the network. The processing unit 12 estimates the lifetime of the refrigerant pipe 6 based on a change in the electrical resistance.

With such a configuration, it is possible to improve the accuracy of the lifetime estimation of the refrigerant pipe 6 in the refrigeration cycle device 1B, and to transmit the information of the electrical resistance detected by the corrosion sensor 11 from the refrigeration cycle device 1B to another device. Specifically, the information of the electrical resistance measured by the corrosion sensor 11 can be transmitted to the processing device 51 that is independent from the refrigeration cycle device 1B. For example, when a seller has the processing device 51, a maintenance service can be provided based on the lifetime estimation estimated by the processing unit 12. Therefore, it is possible to suppress a failure in the refrigeration cycle device 1B so as to improve efficiency of maintenance service and to improve user satisfaction.

Note that the processing device 51 may receive the information from the plurality of refrigeration cycle devices 1B.

Although the present disclosure has been fully described in connection with the preferred embodiments thereof with reference to the accompanying drawings, it is to be noted that various changes and modifications are apparent to those skilled in the art. Such changes and modifications are to be understood as included within the scope of the present disclosure as defined by the appended claims unless they depart therefrom.

INDUSTRIAL APPLICABILITY

The refrigeration cycle device and the refrigeration cycle system according to the present disclosure are useful as an air conditioner, because the refrigeration cycle device and the refrigeration cycle system can improve the accuracy of the lifetime estimation of a refrigerant pipe containing aluminum as a main component.

Reference Numerals

| | |
|---|---|
| 1, 1A, 1B | refrigeration cycle device |
| 2 | first heat exchanger |
| 3 | compressor |
| 4 | second heat exchanger |
| 5 | expansion mechanism |
| 6, 6a, 6b | refrigerant pipe |
| 7 | sacrificial layer |
| 8 | four-way valve |
| 9 | indoor unit |
| 10 | outdoor unit |
| 11, 11A | corrosion sensor |
| 12 | processing unit |
| 13, 13A | base material |
| 14, 14A | base material sacrificial layer |
| 15 | power supply |
| 16 | measuring unit |
| 17 | converter |
| 18 | corroded portion |
| 19 | temperature sensor |
| 20 | conductive wire |
| 21 | fins |
| 30 | RCM sensor |
| 31 | reference unit |
| 32 | display device |
| 33 | protection layer |
| 41 | refrigeration cycle system |
| 42 | storage |

43     first communicator
51     processing device
53     second communicator

## Claims

1. A refrigeration cycle device that includes a first heat exchanger, a compressor, a second heat exchanger, and an expansion mechanism, the refrigeration cycle device comprising:

    a refrigerant pipe that connects the first heat exchanger, the compressor, the second heat exchanger, and the expansion mechanism, through which a refrigerant is circulated, and that contains aluminum as a main component;
    a corrosion sensor that is disposed at least one of on an outer surface of the refrigerant pipe and around the refrigerant pipe, and that measures an electrical resistance; and
    a processing unit that estimates a lifetime of the refrigerant pipe based on a change in the electrical resistance measured by the corrosion sensor,
    wherein the refrigerant pipe has a sacrificial layer on the outer surface of the refrigerant pipe, the sacrificial layer being less noble than the main component of the refrigerant pipe.

2. The refrigeration cycle device according to claim 1, further comprising a temperature sensor that measures a temperature around the corrosion sensor, wherein the processing unit corrects the electrical resistance measured by the corrosion sensor based on the temperature measured by the temperature sensor.

3. The refrigeration cycle device according to claim 1 or 2, wherein the corrosion sensor is disposed on the refrigerant pipe installed in at least one of the first heat exchanger and the second heat exchanger.

4. The refrigeration cycle device according to any one of claims 1 to 3, wherein

    the corrosion sensor includes:

        a base material;
        a base material sacrificial layer that is provided on a surface of the base material and that has a surface potential lower than that of the base material;
        a power supply that generates a constant current flow in the base material and in the base material sacrificial layer;
        a measuring unit that measures a voltage applied to the base material and the base material sacrificial layer; and
a converter that converts the voltage measured by the measuring unit into an electrical resistance,

    a main component of the base material is the same as a main component of the refrigerant pipe, and
    a main component of the base material sacrificial layer is the same as a main component of the sacrificial layer.

5. The refrigeration cycle device according to claim 4, wherein

    a thickness of the base material is substantially equal to a thickness of the refrigerant pipe, and
    a thickness of the base material sacrificial layer is substantially equal to a thickness of the sacrificial layer.

6. The refrigeration cycle device according to claim 4 or 5, wherein the base material and the base material sacrificial layer are plate-like materials.

7. The refrigeration cycle device according to any one of claims 4 to 6, wherein

    a part of the refrigerant pipe is used as the base material, and
    a part of the sacrificial layer is used as the base material sacrificial layer.

8. The refrigeration cycle device according to any one of claims 4 to 7, wherein

    the processing unit calculates a first sectional area of a cross section including the base material and the base material sacrificial layer, based on the electrical resistance measured by the corrosion sensor, on a regular basis, and
    the lifetime of the refrigerant pipe is estimated based on a decreasing tendency of the first sectional area due to a corrosion.

9. The refrigeration cycle device according to claim 8, wherein
the processing unit further:

    calculates a sectional area ratio that is a ratio of the first sectional area with respect to a second sectional area, the second sectional area being the sectional area including the base material and the base material sacrificial layer before the refrigerant pipe is put in use; and
    estimates a point in time at which the sectional area ratio drops to a level equal to or lower than a threshold, as the lifetime of the refrigerant pipe.

**10.** The refrigeration cycle device according to claim 9, wherein the threshold is a ratio of a sectional area of the base material with respect to the second sectional area.

**11.** The refrigeration cycle device according to claim 9 or 10, wherein the processing unit calculates an approximation formula of the sectional area ratio, and estimates the lifetime of the refrigerant pipe based on the approximation formula and the threshold.

**12.** The refrigeration cycle device according to any one of claims 1 to 10, further comprising a display device that displays the lifetime of the refrigerant pipe, the lifetime being estimated by the processing unit.

**13.** The refrigeration cycle device according to any one of claims 1 to 11, further comprising a four-way valve that changes a direction in which the refrigerant flows through the refrigerant pipe.

**14.** A refrigeration cycle system comprising:

a refrigeration cycle device including a first heat exchanger, a compressor, a second heat exchanger, and an expansion mechanism; and
a processing device that communicates with the refrigeration cycle device over a network,
wherein
the refrigeration cycle device includes:

a refrigerant pipe that connects the first heat exchanger, the compressor, the second heat exchanger, and the expansion mechanism, through which a refrigerant is circulated, and that contains aluminum as a main component;
a corrosion sensor that is disposed at least one of on an outer surface of the refrigerant pipe and around the refrigerant pipe, and that measures an electrical resistance;
a storage that stores therein information of the electrical resistance measured by the corrosion sensor; and
a first communicator that transmits the information of the electrical resistance stored in the storage over the network,

the refrigerant pipe has a sacrificial layer on the outer surface of the refrigerant pipe, the sacrificial layer being less noble than the main component of the refrigerant pipe, and
the processing device includes:

a second communicator that receives the information of the electrical resistance over the network; and
a processing unit that estimates a lifetime of the refrigerant pipe based on a change in the electrical resistance.

Fig. 1

Fig. 2

## Fig. 3

Fig. 4

Fig. 5A

Fig. 5B

Fig. 6

EP 4 202 320 A1

Fig. 7

Fig. 8

REFRIGERATION CYCLE DEVICE

1A

2 — FIRST HEAT EXCHANGER

COMPRESSOR — 3

4 — SECOND HEAT EXCHANGER

EXPANSION MECHANISM — 5

6 — REFRIGERANT PIPE

CORROSION SENSOR — 11

PROCESSING UNIT — 12

DISPLAY DEVICE — 32

Fig. 9

REFRIGERATION CYCLE DEVICE 1B

| 2 | FIRST HEAT EXCHANGER | COMPRESSOR | 3 |
| 4 | SECOND HEAT EXCHANGER | EXPANSION MECHANISM | 5 |
| 6 | REFRIGERANT PIPE | CORROSION SENSOR | 11 |
| 42 | STORAGE | FIRST COMMUNICATOR | 43 |

41

PROCESSING DEVICE

PROCESSING UNIT 12

SECOND COMMUNICATOR 53

51

## INTERNATIONAL SEARCH REPORT

| International application No. |
|---|
| **PCT/JP2021/017928** |

**A. CLASSIFICATION OF SUBJECT MATTER**

*F25B 49/02*(2006.01)i; *G01N 17/04*(2006.01)i; *F25B 47/00*(2006.01)i
FI: F25B49/02 A; F25B47/00 A; F25B49/02 570Z; G01N17/04

According to International Patent Classification (IPC) or to both national classification and IPC

**B. FIELDS SEARCHED**

Minimum documentation searched (classification system followed by classification symbols)

F25B49/02; G01N17/04; F25B47/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/199569 A1 (MITSUBISHI ELECTRIC CORP) 23 November 2017 (2017-11-23) claim 14, paragraphs [0016]-[0069], fig. 1-9 | 1-14 |
| Y | JP 2018-81061 A (HITACHI LTD) 24 May 2018 (2018-05-24) paragraphs [0021]-[0059], fig. 1-14 | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/017928**

| Patent document cited in search report | Publication date (day/month/year) | Patent family member(s) | Publication date (day/month/year) |
|---|---|---|---|
| WO 2017/199569 A1 | 23 November 2017 | (Family: none) | |
| JP 2018-81061 A | 24 May 2018 | US 2019/0353608 A1 paragraphs [0038]-[0076], fig. 1-14<br>WO 2018/092519 A1<br>KR 10-2019-0051016 A<br>CN 109964120 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017199569 A